# EUROPÄISCHE PATENTANMELDUNG

(11) **EP 0 798 624 A2**
(43) Veröffentlichungstag der Anmeldung: **01.10.1997**
(21) Anmeldenummer: 97105150.3
(22) Anmeldetag: 26.03.1997
(51) Int. Cl.: G06F 1/30

(54) **Verfahren zum Betrieb eines Mikrocontrollers bei verminderter Betriebsspannung sowie Anordnung zur Durchführung des Verfahrens und Verwendung des Verfahrens und/oder der Anordnung**

(30) Priorität: 29.03.1996 DE 19612697
(71) Anmelder: SIEMENS AKTIENGESELLSCHAFT, 80333 München (DE)
(72) Erfinder: Puchta, Ralf, Dipl.-Ing. (FH), 93053 Regensburg (DE)

(57) **Zusammenfassung**

Zum kostengünstigen, definierten Überbrücken eines kurzen Ausfalls bzw. eines Einbruchs der Betriebsspannung (Uein) werden sämtliche leistungsintensiven Verbraucher vom Mikrocontroller (MC) getrennt und dessen relevante Speicherdaten vorübergehend in einem nichtflüchtigen Speicher (EEPROM) abgelegt; die, insbesondere mittels eines RC-Gliedes, ermittelte Ausfallzeit der Betriebsspannung entscheidet, ob die EEPROM-Daten in den Mikrocontroller (MC) zurückgeladen werden oder ob dieser nach "Reset" neu programmiert werden muß.

## Beschreibung

Die Erfindung bezieht sich auf ein Verfahren zum Betrieb eines Mikrocontrollers bei verminderter Betriebsspannung gemäß Patentanspruch 1 sowie eine Anordnung zur Durchführung des Verfahrens gemäß den Patentansprüchen 2 bzw. 3 und eine Verwendung des Verfahrens und/oder der Anordnung gemäß den Patentansprüchen 4 bzw. 5 bzw. 6.

In Haushaltsgeräten, wie z.B. Waschmaschinen und Herden, der Komfortklasse werden zunehmend elektronische Steuerungen eingesetzt, die zumindest einen Mikrocontroller enthalten. Über derartige Mikrocontroller werden z.B. gespeicherte Programme betrieben jedoch auch Temperatur-Einstellungen und Signalanzeigen angesteuert. Um bei, insbesondere kurzzeitigen, Spannungseinbrüchen in der den Mikrocontroller versorgenden Betriebsspannung einen kompletten Datenverlust und damit eine Neuprogrammierung vermeiden zu können, wird in z.B. durch die EP 0 563 924 A1, Figur 3 an sich bekannter Art eine Ersatz-Betriebsspannungsversorgung durch einen der speisenden Betriebsspannung parallelgeschalteten Kondensator vorgesehen. Dieser Kondensator muß dann so groß bemessen sein, daß er in dem den Spannungseinbruch überbrückenden Zeitraum die notwendige Energie für den weiterhin voll arbeitenden und schaltenden Mikrocontroller liefern kann.

Durch "Design & Elektronik", Ausgabe 8 vom 12.04.1988, Seiten 78-83, insbesondere Bild 4 ist eine Überwachungsschaltung für Mikroprozessorsysteme bekannt, bei der bei Unterschreiten einer Mindest-Betriebsspannung der Ausgang eines Spannungsdetektors auf niedriges Potential geht und den Mikroprozessor über einen nicht umschaltbaren Interrupt-Eingangspin (NMI) unterbricht. Die System-Software speichert dann sämtliche zu rettenden Daten in ein CMOS-RAM und geht in eine Überwachungs-Schleife für den nicht umschaltbaren Interrupt-Eingangspin. Liegt der Mindestwert der Betriebsspannung wieder an, läuft die Sequenz in umgekehrter Reihenfolge ab.

Durch die DE 44 13 674 A1 ist außerdem ein Stromversorgungs-Steuersystem für tragbare Datenverarbeitungsgeräte bekannt, das u.a. aufgrund eines dauernden Spannungsvergleichs bei Abfall der Hauptbatteriespannung unter einen Referenzwert die jeweils momentan vorliegende Betriebsart auf eine Betriebsart mit niedrigerem Energieverbrauch zurücksetzt.

Durch die DE 44 09 286 C1 ist ein Verfahren zum Erkennen eines Reset-Vorgangs an einem Mikroprozessor derart bekannt, daß bei vorhandener externer Versorgungsspannung ein Kondensator geladen wird, welcher sich bei fehlender externer Versorgungsspannung mit einer vorbestimmten Entladezeitkonstante entlädt, die länger als die Dauer eines Kurzzeit-Resets aufgrund kurzzeitiger Schwankungen der Versorgungsspannungen oder Fehlerzustände der Software des Mikroprozessors ist; der Kondensator liegt an einem Port des Mikroprozessors, welcher zumindest unmittelbar nach einem Reset als Eingangsport geschaltet ist, so daß aus dem Vorhandensein einer Spannung an dem Port unmittelbar nach einem Reset-Zustand vom Mikroprozessor erkennbar ist, ob ein Kurzzeit-Reset oder ein Langzeit-Reset vorlag.

Gemäß Aufgabe vorliegender Erfindung soll der Aufwand zum definierten Überbrücken eines Spannungseinbruchs in der Betriebsspannung eines Mikrocontrollers ohne Gefahr eines Datenverlustes mit einfachen Mitteln gemindert werden.

Die Lösung dieser Aufgabe gelingt erfindungsgemäß durch ein Verfahren gemäß Patentanspruch 1 bzw. durch eine Anordnung zur Durchfuhrung des Verfahrens gemäß den Patentansprüchen 2 bzw. 3 sowie durch eine Verwendung des Verfahrens und/oder der Anordnung gemäß den Patentansprüchen 4 bzw. 5 bzw. 6.

Bei dem erfindungsgemäßen Verfahren braucht die Ersatz-Betriebsspannungsversorgung, insbesondere der zweckmäßigerweise dazu vorgesehene Speise-Kondensator, in vorteilhafter Weise nur entsprechend dem Leistungsbedarf ausgelegt werden, der notwendig ist, um die relevanten Speicherdaten des Mikrocontrollers in dem nichtflüchtigen Speicher ablegen zu können; wird aufgrund zu langen bzw. zu starken Spannungseinbruchs der Betriebsspannung der Mikrocontroller in Reset-Stellung gebracht, so sind nach einem Reset bei wieder vorhandener Betriebsspannung lediglich die relevanten Speicherdaten wieder aus dem nichtflüchtigen Speicher auszulesen, um anschließend durch den Mikrocontroller weiterverarbeitet werden zu können.

Dadurch daß der Mikrocontroller nach dem Abschalten der leistungsintensiven Verbraucher durch die eine Flanke in vorteilhafter Weise auch gleichzeitige auf die andere Flankenerkennung umgeschaltet ist, bedarf es zum Rücksetzen nach der Wiederkehr der Betriebsspannung nur des externen Steuersignals mit der anderen Flanke; dadurch erübrigt sich ein Zwischenbetrieb mit einer leistungsverbrauchenden Überwachungs-Schleife.

Die Erfindung wird im folgenden anhand eines schematischen Ausführungsbeispiels in der Zeichnung näher erläutert; darin zeigen:
- FIG 1: das grundsätzliche Blockschaltbild einer, z.B. für eine elektronische Backofensteuerung eines Herdes vorgesehenen, Spannungsversorgung für einen Mikrocontroller;
- FIG 2: die Spannungsverläufe am Eingang des Mikrocontrollers;
- FIG 3: ein Signalflußdiagramm zur Erläuterung des erfindungsgemäßen Verfahrens.

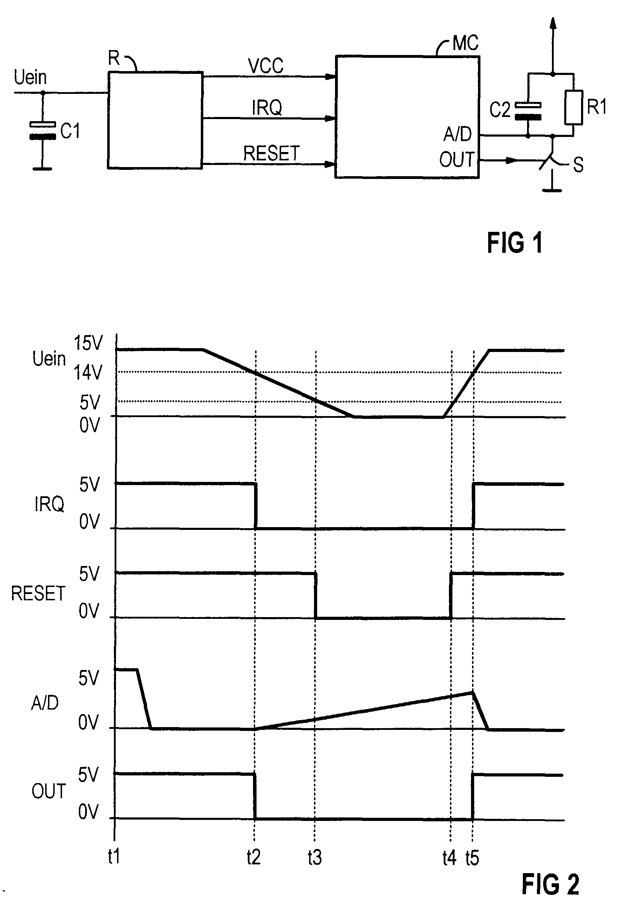

FIG 1 zeigt das Blockschaltbild eines über einen Spannungsregler R aus einer Betriebsspannung Uein gespeisten Mikrocontroller MC. Der Mikrocontroller MC weist zumindest einen Eingangspin VCC für die Betriebsspannung, einen Interrupt-Eingangspin für ein externes Interrupt-Steuersignal IRQ und einen Eingangspin für ein Reset-Signal zum Ein- bzw. Ausschalten des Mikrocontrollers MC auf. In dem Spannungsregler R wird die Betriebsspannung Uein von ca. 15 Volt auf ca. 5 Volt reduziert. Parallel zu der Betriebsspannung Uein liegt ein Speise-Kondensator C1, der als Ersatz-Betriebsspannungsversorgung bei kurzzeitiger Unterbrechung bzw. bei kurzzeitigem Einbruch der Betriebsspannung Uein vorgesehen ist. An einen weiteren Eingangspin A/D ist jeweils bei Einbruch oder Unterbrechung der Betriebsspannung der Spannungssignalverlauf einer sich entladenden RC-Schaltung mit einem Lade-Kondensator C2 und einem Parallel-Widerstand R1 als Zeitmeßvorrichtung anlegbar, deren Lade-Kondensator C2 jeweils zuvor über einen durch ein OUT-Signal des Mikrocontrollers MC ansteuerbaren Schalter S an eine Aufladespannung von hier ca. 5 Volt anschließbar ist.

FIG 2 zeigt jeweils den Verlauf der am Eingang des Spannungsreglers R liegenden Betriebsspannung Uein sowie die Signalverläufe der am Interrupt-Eingangspin und am Reset-Pin des Mikrocontrollers MC anliegenden Spannungen. Im Zeitpunkt t1 ist ein Mindestwert von ca. 15 Volt für die Betriebsspannung Uein und somit den vollen Schaltbetrieb über den Mikrocontroller MC gegeben; das Signal am OUT-Pin des Mikrocontrollers MC ist auf "High" gesetzt, derart daß der Schalter S in Stellung "Ein" gebracht und dadurch die Zeitmeßvorrichtung in Form des RC-Gliedes R1;C2 an eine Ladespannung von ca. 5 Volt entsprechend der Spannung am VCC-Pin des Mikrocontrollers MC gelegt ist. Die Flankerkennung am Interrupt-Eingangspin des Mikrocontrollers MC ist auf "Fallende Flanke" gesetzt. Im Zeitraum zwischen t1 und t2 beginnt ein Spannungseinbruch, wodurch am Interrupt-Eingangspin des Mikrocontrollers MC im Zeitpunkt t2 eine "Fallende Flanke" anliegt; dieser Spannungseinbruch wird aufgrund des am Interrupt-Eingangspin des Mikrocontrollers MC anliegenden Steuersignals mit fallender Flanke erkannt; dementsprechend werden sämtliche leistungsintensiven Stromverbraucher vom Mikrocontroller MC abgeschaltet bzw. sämtliche wichtigen Speicherdaten im nichtflüchtigen Speicher EEPROM abgelegt und zwischengespeichert. Gleichzeitig wird durch ein entsprechendes Steuersignal am OUT-Pin des Mikrocontrollers MC der Schalter S geöffnet, so daß sich der Ladekondensator C2 mit definierter Zeitkonstante über den Parallel-Widerstand R1 zu entladen beginnt; der jeweilige Spannungszustand der Zeitmeßvorrichtung in Form des RC-Gliedes R1;C2 liegt am A/D-Pin des Mikrocontrollers MC an. Im Zeitpunkt t3 ist beispielhaft angenommen, daß die Ladung am Speisekondensator C1 zusammenbricht, derart daß die Eingangsspannung am Reset-Pin des Mikrocontrollers MC unter die zur Einschaltung des Mikrocontrollers MC notwendige Mindestspannung von 5 Volt fällt; dementsprechend ist die Signalspannung am Reset-Pin des Mikrocontrollers MC auf Low gesetzt.

Im Zeitpunkt t4 steigt die Betriebsspannung nach dem Ende des Spannungseinbruchs bzw. der Spannungsunterbrechung wieder an und bewirkt, daß beim Erreichen einer Eingangsspannung von ca. 5 Volt die Signalspannung am Reset-Eingang des Mikrocontrollers MC wieder auf "High" gesetzt und somit der Mikrocontroller MC selbst wieder eingeschaltet ist. Im Zeitpunkt t5 wird aufgrund eines Anliegens einer steigenden Flanke am Ausgang des Spannungsreglers R und somit eines entsprechenden Steuersignals am Interrupt-Eingangspin des Mikrocontrollers MC das Wiedervorhandensein der vollen Betriebsspannung von ca. 15 Volt erkannt. Durch die im Zeitpunkt t5 am A/D-Pin des Mikrocontrollers MC anliegende augenblickliche Entladespannung des Ladekondensators C2 der Zeitmeßvorrichtung in Form des R/C-Gliedes R1;C2 kann nunmehr die Ausfallzeit der Betriebsspannung ermittelt und im Mikrocontroller MC entschieden werden, ob der im nichtflüchtigen Speicher EEPROM abgelegte Datenbestand wiederverwendet und im normalen Programmablauf fortgefahren werden kann oder ob neu progammiert werden muß. Beim Fortfahren mit normalem Programmablauf werden die Flankenerkennung am Interrupt-Eingangspin wieder auf "Fallende Flanke" gesetzt und der Ladekondensator C2 durch Schließen des Schalters S und damit Anlegen an die Spannung von 5 Volt wiedergeladen.

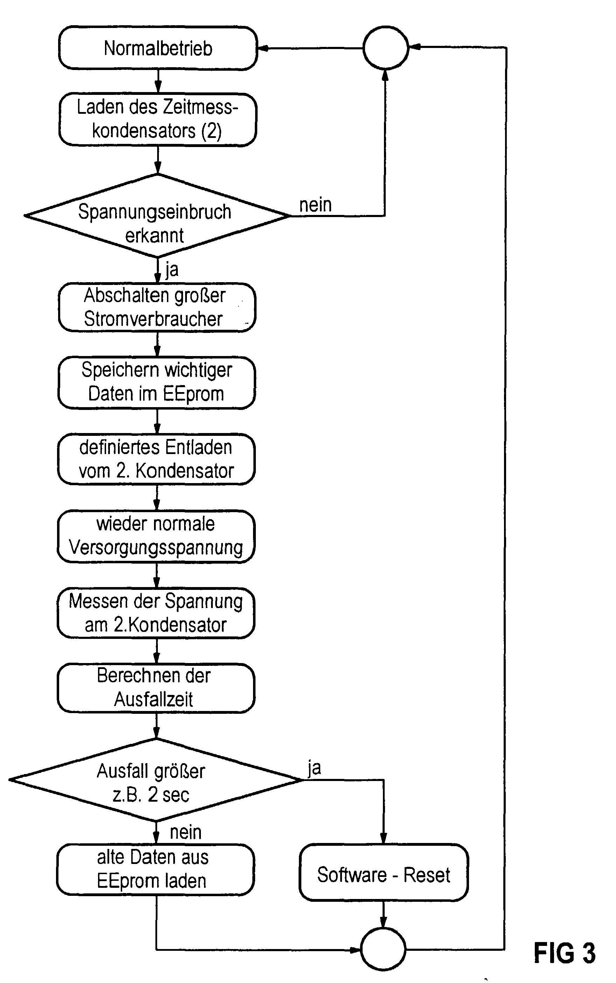

Die einzelnen Verfahrensschritte sind anhand FIG 3 nochmals in einem Signalflußdiagramm erläutert, das Gegenstand der erfindungswesentlichen Beschreibung ist.

## Patentansprüche

1. Verfahren zum Betrieb eines Mikrocontrollers (MC) bei verminderter Betriebsspannung (Uein) mit folgenden Schritten:
a) Bei Erreichen bzw. Überschreiten (t1) eines ersten Mindestwertes einer steigenden Betriebsspannung (Uein) wird durch ein externes Steuersignal (IRQ) mit steigender Flanke ein umschaltbarer Interrupt-Eingangspin des Mikrocontrollers (MC) auf eine fallende Flankenerkennung des Steuersignals gesetzt;
b) bei Unterschreiten (t2) eines zweiten Mindestwertes einer fallenden Betriebsspannung (Uein) werden durch ein externes Steuersignal (IRQ) mit fallender Flanke der Interrupt-Eingangspin auf eine steigende Flankenerkennung des Steuersignals und der Mikrocontrollers (MC) belastungsfrei von leistungsintensiven Verbrauchern gesetzt sowie eine Zeitmessung initiiert;
c) die Speicherdaten des Mikrocontrollers (MC) werden, zumindest teilweise, in einem nichtflüchtigen Speicher (EEPROM) abgelegt;
d) bei Wiedererreichen (t5) bzw. Überschreiten des ersten Mindestwertes einer wieder steigenden Betriebsspannung (Uein) wird der Interrupt-Eingangspin des Mikrocontrollers (MC) auf eine fallende Flankenerkennung des Steuersignals zurückgesetzt
e) abhängig von der durch die Zeitmessung erfaßten Zeitdauer der verminderten Betriebsspannung (Uein) wird der Mikrocontroller (MC) aus dem nichtflüchtigen Speicher (EEPROM) zurückgeladen oder in "Reset-Stellung" gesetzt.

2. Anordnung zur Durchfuhrung des Verfahrens nach dem vorhergehenden Anspruch mit dem Merkmal:
f) Zur Zeitmessung ist eine Zeitmeßvorrichtung in Form einer RC-Schaltung (R1;C2) vorgesehen, deren Lade-Kondensator (C2) im Zeitraum (t1-t2) ladbar und ab dem Zeitpunkt (t2) entladbar ist und durch dessen Teil-Ladezustand bei Wiedererreichen des Mindestwertes der Betriebsspannung (Uein) die Zeitdauer der verminderten bzw. unterbrochenen Betriebsspannung repräsentierbar ist.

3. Anordnung zur Durchführung des Verfahrens mit einer Ersatz-Betriebsspannungsversorgung, insbesondere in Form eines Speise-Kondensators (C1), nach zumindest einem der vorhergehenden Ansprüche mit dem Merkmal:
g) Die Ersatz-Betriebsspannungsversorgung, insbesondere der Speise-Kondensator (C1), ist entsprechend dem Leistungsbedarf des Ladens des nichtflüchtigen Speichers (EEPROM) ausgelegt.

4. Verwendung des Verfahrens und/oder der Anordnung nach zumindest einem der vorhergehenden Ansprüche für eine elektronische Steuerung eines Haushaltsgeräts.

5. Verwendung des Verfahrens und/oder der Anordnung nach dem vorhergehenden Anspruch für die elektronische Steuerung eines Herdes.

6. Verwendung des Verfahrens und/oder der Anordnung nach dem vorhergehenden Anspruch für die elektronische Steuerung eines Backofens.
